# EUROPEAN PATENT APPLICATION

(11) **EP 2 451 218 A1**
(43) Date of publication of application: **09.05.2012**
(21) Application number: 10251897.4
(22) Date of filing: 04.11.2010
(51) Int. Cl.: H04W 48/08

(54) **Wireless communication access point**

(71) Applicant: British Telecommunications Public Limited Company, London EC1A 7AJ (GB)
(72) Inventor: The designation of the inventor has not yet been filed
(74) Representative: Lidbetter, Timothy Guy Edwin

(57) **Abstract**

A mobile cellular communications device (1) is associated with a first, wide area, Mobile Network Code for connection through a wireless communication access point (femtocell) (4) to a cellular telecommunications network by way of a data communications network (5) , and also with a second, local, Mobile Network Code for making connections with other devices (3, 21, 22) served by local connections (48, 49) to the same access point base station (4). These connections may be made by the same or a different protocol to that used by the first device.

## Description

This invention relates to wireless communication access points. It is particularly concerned with the type of access point known as a "femtocell", but may find application in other mobile or wireless technologies.

A femtocell, (also known as an Access Point Base Station), operates as a short range base station operating as part of a 3GPP mobile network. It co-operates with cellular handsets like a normal base station but, unlike normal cellular base stations, (including so-called microcells and picocells), a femtocell is not connected directly to the cellular switching system and the neighbouring cells do not have any awareness of their presence. Instead it connects with the cellular operator's core network through a data communications network (typically the "Internet") to a server that interfaces with the cellular operator's switching. The femtocell gives wireless coverage in a limited area. A typical example is a UMTS ("3G") cellular access point base station, connected to an Ethernet or broadband connection to the Internet or an intranet. The internet connection provides access to a femtocell security and aggregation server or gateway and then the traffic is passed to the dedicated mobile switching centre which reports the handover to the user's home location register in the conventional manner. Application of secured IP tunnelling technologies allows such a unit to be deployed as readily as a wi-fi (IEEE 802.11) access point, and provide the capabilities of a normal cellular base station. They are of particular use in locations such as parts of buildings where coverage from public cellular base stations is poor.

Femtocells operate on cellular network air-interfaces (3G, HSDPA, LTE) and 3GPP standards, and a mobile network code (MNC) is sent in the preamble or broadcast channels. The MNC is used in combination with a Mobile Country Code (MCC) in order to uniquely identify a mobile operator. They do not form part of the planned cellular channel plan used by the overlay network but operate in another part of the spectrum compatible with standard cellular handsets. As they are not part of the planned overlay network they do not appear on the neighbour lists of any of the nearby public base stations in the area. These neighbour lists are provided to assist the mobile unit to identify a base station to which to hand over when signal strength is deteriorating, to avoid loss of signal, particularly when a mobile unit is moving rapidly. The absence of a neighbour list is of less importance in the circumstances in which a femtocell is likely to be used, as its small range means that connection to it during rapid movement is neither possible nor desirable.

A handset coming into range of a base station not on the neighbour list of a currently serving base station will nevertheless hand over to it, so handover between a femtocell and the overlay network can still take place. This applies whether the femtocell coverage overlaps that of the nearest base station or not. To the cellular network as a whole, which has no knowledge of the geographical location of the femtocell, the handset will appear to jump from one part of the network to another, and back again.

A femtocell thus differs from a picocell primarily in the use of fixed broadband lines for backhaul instead of a dedicated network, and in that its absence from the cellular telephone network operator's local neighbour list allowing the ability for it to be installed, moved, and de-installed by a user without affecting the operation of the rest of the cellular network.

It is known to implement a dual mobile network code (MNC) capability for a wireless access point using the IEEE 802.11 "Wi-Fi" standard, allowing the provision of different levels of access for a user and the general public. In such arrangements a private WiFi SSID ("service set identifier", similar to a mobile network code) supports local access, whilst a separate open WiFi SSID only supports wide-area access. A Private WiFi SSID offers local access to an access point ("Hub"), which can be used for access to other local devices or their shared connection to the Internet. A Public & Open WiFi SSID offers local access to an external network, including the Internet, but excludes access to local devices.

WiFi network identities (SSID) are sent in a beacon channel. Unlike the mobile network codes, the SSID is not a unique identifier.

The present invention provides an access point base station having means for connection to a data communications network and provision to generate a first wide area Mobile Network Code for use by terminals to connect to a cellular telecommunications network through the data communications network, and a second local Mobile Network Code for use by one or more mobile terminals to make connections to each other and to devices served by local connections to the access point base station.

This 'Local" MNC would permit cellular telephony protocols such as 3GPP to be used by a terminal to access a private local area network (LAN), so that single-mode handsets can access the cellular telephone network and Internet (using the Wide-Area MNC) and can also access devices such as printers, local servers, etc. connected to the private or 'home' network (using the local MNC). By separating the two MNCs, access to one system can be made more restricted than to the other, for example so that only authorised handsets may access the private LAN. The access point base station is preferably provided with a protocol translation facility allowing a terminal device to use a cellular telephony protocol to use the local mobile network code to access a private local area network operating on a different protocol.

The invention extends to a mobile cellular communications terminal device having the installed capability to take part in communications by way of an access point base station, having a network code data storage facility arranged such that it may support a wide-area mobile network code and a local-area mobile network code, such that it may use the wide-area mobile network code to support communication over a cellular communications network, and may use the local-area mobile network code to communicate with devices connected directly to the same access point base station.

The mobile cellular communications device may be provided with the capability to enable a user to select whether each session connects via the Local MNC or the Wide-area MNC, and may allow sessions to run concurrently or alternately.

The invention also provides a method for connection of a mobile cellular communications device to an access point base station, wherein the mobile device is associated with a first, wide area, Mobile Network Code to a cellular telecommunications network through a data communications network, and a second, local, Mobile Network Code for making connections between devices served by local connections to the access point base station.

Preferably the local mobile network code permits a terminal to use a cellular telephony protocol to access a private local area network through a protocol translation function. The local mobile network code is preferably made available to a predetermined group of mobile devices, such that only devices in the predetermined group may access the private local area network.

The invention therefore applies cellular mobile network access processes to a local network. This capability enables a user to direct sessions from a cellular device to a local printer (for printing or scanning), to a media server (for uploading or downloading media content) or to any other electronic consumer devices that are connected to the local access network. The user can also direct sessions from his cellular device to the wide-area network for calls, messages and Internet access services. This dual MNC capability can be used by mobile operators to provide services within user's premises, enabling for 'smart home' applications such as generating messages for display on other devices ("visual fridge note"), or remote control of electronic appliances.

The Wide-Area MNC is the normal wide-area MNC for conventional access to the mobile network operator's (MNO) wide area network and beyond. For this MNC, all traffic is routed via that MNO's wide area network, and that network provides wide-area mobility for attached devices. However, the conventional MNC does not support connectivity directly to other local devices within the home/office ― because it is difficult to locate and securely connect to such devices through the MNO's wide-area network.

The Local MNC is a private mode of operation for the access point, with traffic being able to leave the network locally at the Femtocell device (or an on-site Femto controller for larger sites). This allows the mobile network operators to provide more applications controllable from the user devices, by enabling a user device to connect to other local devices (such as a media server or printer) via the in-home/office local-area network (e.g. WLAN or Ethernet). However, the local MNC does not offer any mobility (session continuity) outside of the local area (home/office), allowing security to be maintained between the elements of the local network.

The local MNC enables the mobile devices to be part of the home network through a standard cellular interface (e.g. 3GPP) to the access point, while the other devices can be connected to the access point through Wi-Fi or LAN.

While many mobile devices can switch to WiFi for such local services, the use of a consistent set of 3GPP protocols for local access has many benefits including ease of use and service consistency. In particular, while using 3GPP protocols on the Local MNC, the mobile device remains attached to the MNO's network, but is able to connect directly to local devices within the home/office and to the fixed broadband line to that home/office.

For devices that support both MNCs concurrently, this capability also enables the user to perform a local session (printing or media sync) while still being able to make and receive calls & messages via the MNO's wide area network. The user can also locally print a web page that is being retrieved from the Internet via the wide-area network, and download media via the wide-area network for direct storage onto the user's local media server.

An embodiment of the invention will now be described with reference to the drawings, in which
Figure 1 is a schematic representation of the functional elements of an Access Point Base Station (femtocell) according to the invention
Figure 2 is a schematic representation of the elements that co-operate to perform the invention
Figure 3 is a schematic representation of a handset configured to co-operate with the Access Point Base Station.

It should be noted that these functional elements may be embodied in software running on a general-purpose computer.

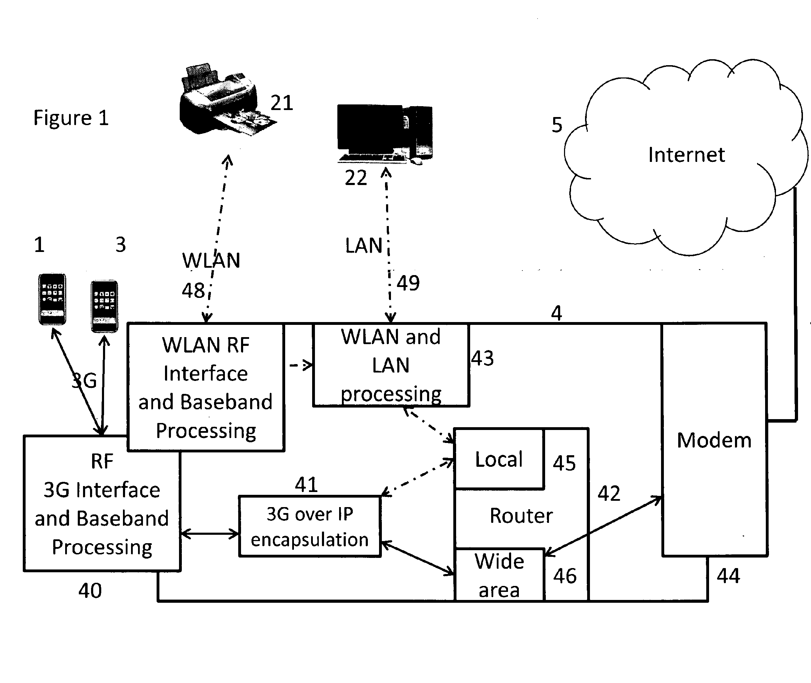

Figure 1 depicts a hardware device 4 having the functions of a local area network router, an access point for LAN and wireless LAN, and an access point base station (femtocell), which will be referred to as a "hub". The hub 4 comprises a wireless interface 40 allowing communication with remote devices 1 3 operating on a cellular telephony standard such as 3Gor GSM and devices 21, 22 such as PC and printer through WLAN (WiFi)/LAN connections. Hubs usually also have provision for fixed-wire connections (e.g. Ethernet) to be made, for example where security or high bandwidth LAN connections are required..The WLAN (WiFi) and LAN processing capability is provided at functional block 43, which provides local connections e.g. by Ethernet (49) as well as over the wireless interface (WLAN) 48. The hub also has a modem 44 for connection to the "Internet" 5 through a data connection.

The hub also includes a router or local switch 45 for managing connections between the internal network and the external internet. The hub is provided with the capability 46 to operate as a cellular base station managing handover and converting signals between the cellular communications protocol to a form suitable for transmission through the data connection between the modem 44 and internet 5.

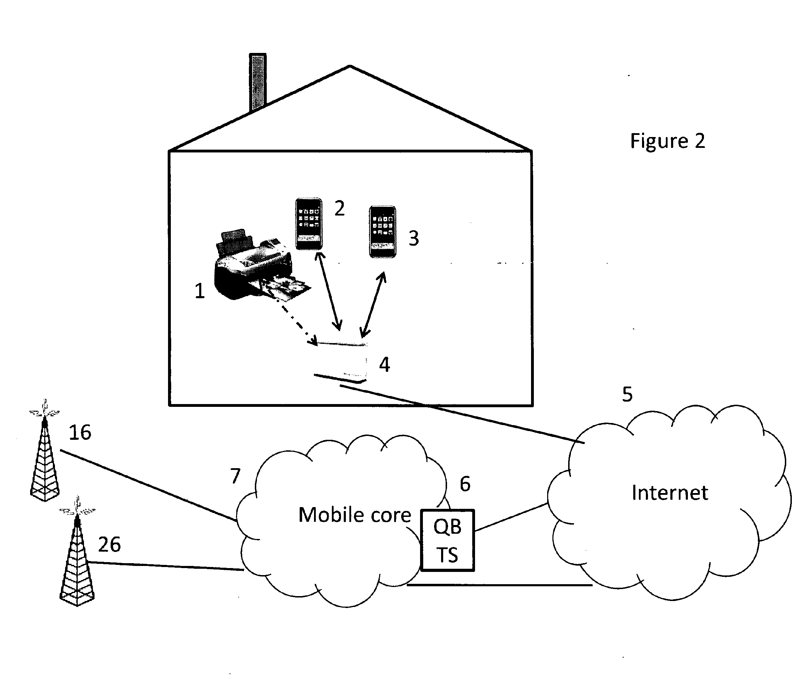

As shown in Figures 1 and 2, a device 3 having capability of communication using a cellular telephony protocol may use the hub 4 to connect to the core cellular network 7 through the internet 5 and a "quasi base transceiver station" (QBTS) 6 which interfaces with the cellular network like a real base transceiver base station 16, 26. Calls routed to the handset 3 are switched through the QBTS by way of the hub 4 when the QBTS and the co-operating femtocell functions 46 in the hub report the presence of the handset. The connection 4, 5 between the femtocell functions 4 46 in the hub and QBTS 6 is transparent to the cellular terminal 3 and to the core 7, which interact with the femtocell and QBTS respectively as they would with any standard base station 16, 26.

As also shown in Figure 1, devices 21 and 22 having a capability of communication using a wireless LAN or LAN protocol may use the hub 4 to connect to the internet 5, or to each other.

According to the present invention the hub 4 has two separate network identities (MNCs) and its operation is partitioned into a first "wide area" part 46, for use by one or more terminals 1, 3 as a normal femtocell to connect to a cellular telecommunications network 7 and the internet 5 through the data communications network using a first MNC, and a second "local" part 45 for use by a plurality of mobile terminals 1, 3 to make connections to each other through the hub 4.

This 'Local" function 45 permits cellular telephony protocols such as 3GPP to be used by a terminal to access the WLAN and LAN and/or the internet by conversion to internet protocols through a conversion function, so that a single-mode handset 3 can access both the cellular telephone network 7 (using the Wide-Area MNC 46) and the internet 5 (using the local MNC 45).

The hub 4 is provided with the capability to generate two separate Mobile Network Codes (MNCs), associated respectively with the wide area part 46 and the local part 45. By providing separate MNCs, access to one system can be made more restricted than to the other, for example so that only authorised handsets may access the WLAN and LAN.

The Wide-Area MNC is the normal wide-area MNC for conventional access to the mobile network operator's (MNO) wide area network and beyond. For this MNC, all traffic is routed via that MNO's wide area network, and that network provides wide-area mobility for attached devices. However, this MNC does not generally support connectivity directly to other local devices within the home/office ― because it is difficult to locate and securely connect to such devices through the MNO's wide-area network.

The Local MNC is,the private mode of operation for the access point 4, with traffic being able to leave the network locally at the router 45 (or an on-side Femto controller for larger sites). This allows the mobile network operators to provide more applications controllable from the user devices, by enabling a user device 1 to connect to other local devices (such as a printer 21 or a media server 22) via the in-home/office local-area network (e.g. WLAN or Ethernet). Such connections may be made from the local side 45 of the femtocell back through the WLAN processor 43 to the target device 21, 22 (with a protocol conversion 41 if necessary) or directly to another cellular device 3 associated with the MNC. However, the local MNC does not offer any mobility (session continuity) outside of the local area (home/office), allowing security to be maintained between the elements of the local network.

The local MNC enables the mobile devices 1, 3 to be part of the home network through a standard cellular interface 40 (e.g. 3GPP) to the access point, while the other devices 21, 22 can be connected to the access point through Wi-Fi 48 or LAN 49. These can, of course, connect to the Internet conventionally through the router 42 and modem 44 without involvement of the femtocell functions 40.

The hub 4 uses the same RF channel for both mobile network codes. Traffic is separated at the router 42, and not at the air interface 40, 48. Cellular traffic is routed to the base station functionality 46, which then generates traffic to be transmitted over the internet connection 5. In the reverse direction, the local router 42 detects traffic addressed for the femtocell and routes it accordingly for conversion (41) to the 3G/GSM signals to be transmitted by the RF interface 40.

Although many mobile devices can switch from cellular protocols for network communication to WiFi protocols for local services, the use of a consistent set of 3GPP protocols for local access has many benefits including ease of use and service consistency. In particular, while using 3GPP protocols on the Local MNC, the mobile device remains attached to the MNO's network, but is able to connect directly to local devices within the home/office and to the fixed broadband line to that home/office.

For devices that support both MNCs concurrently, this capability also enables the user to perform a local session (printing or media sync) while still being able to make and receive calls & messages via the MNO's wide area network. The user can also locally print a web page that is being retrieved from the Internet via the wide-area network, and download

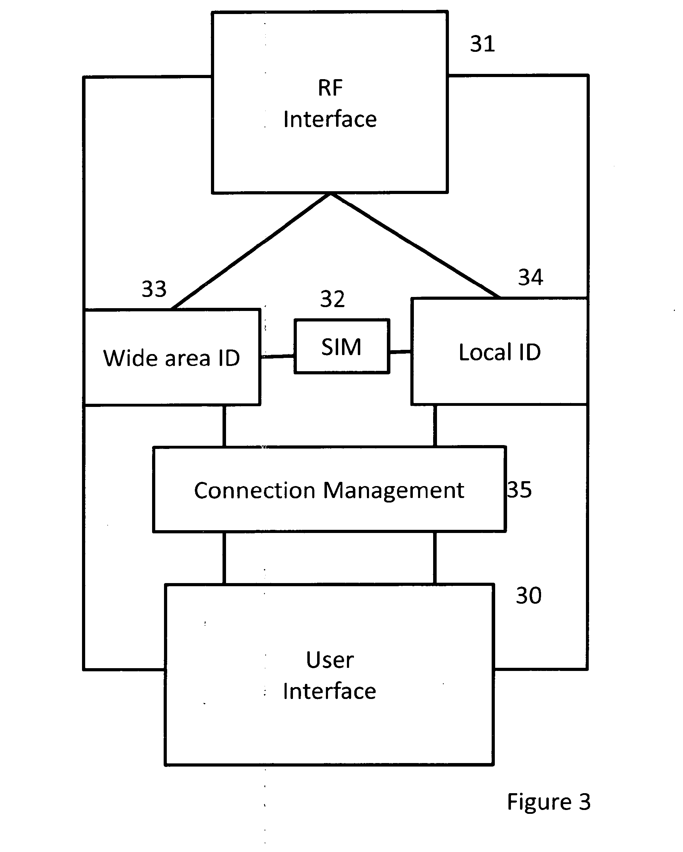

Figure 3 is schematic representation of a device in which the intelligence for traffic separation is installed in the mobile device 1 itself. A connection manager function 34 can be installed or retro-fitted (for example by downloading a new software package) so that the device can selectively support communication (either concurrently or alternately) over a cellular communications network by way of a wide-area MNC over a data communications network, or with other devices connected to the same femtocell over a local area network using a local-area MNC. This device has a user interface 30 (for example keypad, audio input/output, display screen etc) and an RF interface 31 for communicating with cellular base stations16, 26 and 40. A connection management system 35 enables a user to provide an input 30 to select whether a session is to be connected via the conventional Wide-area connection 46, or via the local femtocell connection 45, using respective network and local identities 33, 34 stored in its subscriber identity module (SIM) 32.

The Mobile Operator's MNC links the identity 33 recorded on the handset's SIM card 33 with the mobile BS 4, with the Mobile Network behind that BS & its Authentication Centre (AuC) or HLR (home location register), and hence the subscription that this SIM card has been issued for. The device 3 also has a local ID/IP 34 by which it is identified to the local router 45. Thus the device 3 has two identity codes 33, 34 by which the hub 4 can recognise it, and will co-operate with it in different ways depending on the identity in use. This is similar to the way in which a single-mode device may have different SSIDs for different service types.

The invention therefore allows cellular mobile network access processes to be applied to a local network. This capability enables a user operating a cellular device 1 to direct sessions to other devices on the LAN such as a local printer 21 (for printing or scanning) or media server 22 (for uploading or downloading media content). The user can also direct sessions from his device 1 to the wide-area network 5,7 for calls, messages and direct storage onto the user's local media server.

## Claims

1. An access point base station having means for connection to a data communications network and provision to generate a first wide area Mobile Network Code for use by terminals to connect to a cellular telecommunications network through the data communications network, and a second local Mobile Network Code for use by one or more mobile terminals to make connections to each other and to devices served by local connections to the access point base station.

2. An access point base station according to claim 1, having a protocol translation facility allowing a terminal device to use a cellular telephony protocol to use the local mobile network code to access a private local area network operating on a different protocol.

3. A mobile cellular communications terminal device having the installed capability to take part in communications by way of an access point base station, having a network code data storage facility arranged such that it may support a wide-area mobile network code and a local-area mobile network code, such that it may use the wide-area mobile network code to support communication over a cellular communications network, and may use the local-area mobile network code to communicate with devices connected directly to the same access point base station..

4. A mobile cellular communications device according to claim 3 having the capability to select, under the control of a user, whether each session connects via the Local mobile network code or the Wide-area mobile network code.

5. A mobile cellular communications device according to claim 3 or claim 4 having the capability to support communication over both mobile network codes concurrently.

6. A method for connection of a mobile cellular communications device to an access point base station, wherein the mobile device is associated with a first, wide area, Mobile Network Code to a cellular telecommunications network through a data communications network, and a second, local, Mobile Network Code for making connections between devices served by local connections to the access point base station.

7. A method according to claim 6, wherein the local mobile network code permits a terminal to use a cellular telephony protocol to access a private local area network through a protocol translation function.

8. A method according to claim 5 or claim 6, wherein the local mobile network code is made available to a predetermined group of mobile devices, such that only devices in the predetermined group may access the private local area network.
